# EUROPEAN PATENT APPLICATION

(11) **EP 3 527 525 A1**
(43) Date of publication of application: **21.08.2019**
(21) Application number: 18197623.4
(22) Date of filing: 28.09.2018
(51) Int. Cl.: B66B 13/26

(54) **ELEVATOR DOOR CONTROL SYSTEM FOR DETECTION OF OBSTACLE TRAPPING**

(30) Priority: 29.09.2017 US 201715721312
(71) Applicant: Otis Elevator Company, Farmington, Connecticut 06032 (US)
(72) Inventor: HAN, HakKi, 08227 Guro-gu (KR)
(74) Representative: Dehns

(57) **Abstract**

The present disclosure is directed to an elevator door control system, which can prevent the risk of an obstacle-trapping (e.g. finger-trapping) accident. According to one aspect of the present disclosure, there is provided an elevator door control system comprising: at least a camera module configured to monitor opening/closing of doors of an elevator and analyze the captured video to determine whether there is an obstacle-trapping accident; a data communication part configured to transmit the analyzed video; and a main controller of the elevator configured to control opening/closing of the doors of the elevator based on determination results of the analyzed video transmitted from the data communication part.

## Description

### TECHNICAL FIELD

The present disclosure relates to an elevator door control system, and more particularly, to an elevator door control system for detecting an obstacle trapping including e.g. finger jamming.

### BACKGROUND ART

While doors of an elevator are opening, there often occurs an accident that an obstacle such as a child's finger is trapped in a gap between the doors and the gate frames of the elevator.

If taking an example of a child's finger, unfortunately, existing elevator door systems fail to provide appropriate prevention for such a finger-trapping accident so far.

Therefore, in some countries, there is a systematic mandatory means to prevent accidents that a child's finger is jammed at the doors of an elevator car and doors of the landing side.

### DISCLOSURE OF THE INVENTION

The present disclosure is directed to an elevator door control system, which can prevent the risk of an obstacle-jamming such as finger-trapping accident.

According to one aspect of the present disclosure, there is provided an elevator door control system, the system comprising: at least a camera module configured to monitor opening or closing of doors of an elevator and analyze the monitored video to determine whether there is an obstacle-trapping accident; a data communication part configured to transmit the analyzed video; and a main controller of the elevator configured to control opening or closing of the doors of the elevator based on determination results of the analyzed video transmitted from the data communication part.

The obstacle could be a finger. Desirably, the monitoring of the camera module can include to capture the opening or closing of doors of the elevator for the video analysis.

Preferably the camera module directly captures the opening or closing of the doors of the elevator at monitoring zones, and the monitoring zones include at least a gap between the elevator door and a gate frame.

Preferably the camera module captures the opening or closing of the doors of the elevator after a command to open the doors is issued from the main controller of the elevator until the doors of the elevator reach the monitoring zones.

Preferably, the camera module is an Internet of Things (IoT) camera configured to detect the obstacle in the gap between the elevator door and the gate frame.

Preferably the at least one camera module is disposed on a door operator lintel installed above the elevator door (car door or landing door).

Preferably the doors of the elevator comprises an elevator car door and a landing door, and the camera module comprises a video capturing unit configured to capture opening or closing of the elevator car door and the landing door; a video processing and analyzing unit configured to analyze the video captured by the video capturing unit to determine whether there is an obstacle-trapping accident; and a signal transmission unit configured to transmit determination results from the video processing and analyzing unit to the data communication part.

Preferably the video processing and analyzing unit compares a reference video without any obstacle within a gap between the elevator door and the gate frame of the elevator door with the video captured after the main controller of the elevator issues a command to open the doors, to determine whether there is an obstacle-trapping accident.

Preferably the video processing and analyzing unit comprises filter functionality for identifying a false image or for preventing an erroneous operation caused by light reflected off a structure in the elevator.

Preferably the camera module further comprises a sound detection unit configured to detect a finger-trapping accident based on a screaming sound.

According to one aspect of the present disclosure, there is provided a method for controlling doors of an elevator to detect an obstacle-jamming (e.g. finger-trapping) accident, the method comprising: monitoring opening or closing of the doors of the elevator, the monitoring being carried out directly on monitoring zones including gaps between the doors of the elevator and gate frames, after a command to open the doors is received from a main controller of the elevator until the doors of the elevator reach the monitoring zones; determining whether there is an obstacle-trapping accident by analyzing the captured video; and controlling the opening or closing of the doors of the elevator based on the determination results as to whether an obstacle is trapped in any of the gaps.

Preferably the monitoring step includes capturing the opening or closing of the doors of the elevator, and the determining step is conducted by comparing a reference video without any obstacle within the gap with the video captured after the main controller of the elevator issues a command to open the doors.

Preferably the determining step comprises a filter step for identifying a false image or for preventing an erroneous operation caused by light reflected off a structure in the elevator.

Preferably the method further comprises a step of sound detection configured to detect a finger-trapping accident based on a screaming sound.

According to another aspect of the present disclosure, there is provided an elevator car comprising: at least one elevator door configured to be opened or closed by relative movement to a gate frame; and at least one Internet of Things (IoT) camera configured to detect an obstacle in a gap between the elevator door and the gate frame, wherein the at least one IoT camera is disposed on a car door operator lintel installed above the elevator door so that it directly captures a monitoring zone including the gap, and wherein the elevator door is opened or closed based on results of the determination as to whether an obstacle is trapped in the gap made by the IoT camera.

Preferably the IoT camera comprises: a video capturing unit configured to capture opening or closing of the elevator door, the capturing being carried out directly on the monitoring zone after a command to open the doors is received from a main controller of the elevator until the doors of the elevator reach the monitoring zone; a video processing and analyzing unit configured to analyze the video captured by the video capturing unit to determine whether there is an obstacle-trapping accident; and a signal transmission unit configured to transmit determination results from the video processing and analyzing unit to the data communication part.

Preferably the video processing and analyzing unit is configured to compare a reference video without any obstacle within the gap with the video captured after the main controller of the elevator issues a command to open the doors, to determine whether there is an obstacle-trapping accident.

Preferably the video processing and analyzing unit comprises filter functionality for identifying a false image or for preventing an erroneous operation caused by light reflected off a structure in the elevator.

Preferably the camera module further comprises a sound detection unit configured to detect a finger-trapping accident based on a screaming sound.

### BRIEF DESCRIPTION OF THE DRAWINGS

FIG. 1 is a diagram schematically showing an exemplary elevator car door system equipped with a camera for detecting an obstacle-trapping (e.g. finger-trapping) accident according to an embodiment of the present disclosure;
FIG. 2 is a diagram showing cross sections of monitoring zones inspected by an elevator door control system in the elevator car door system of FIG. 1;
FIG. 3 is a block diagram of the elevator door control system according to an embodiment of the present disclosure; and
FIG. 4 is a flowchart for illustrating operations of a method for controlling the doors of the elevator according to an embodiment of the present disclosure.

### DETAILED DESCRIPTION

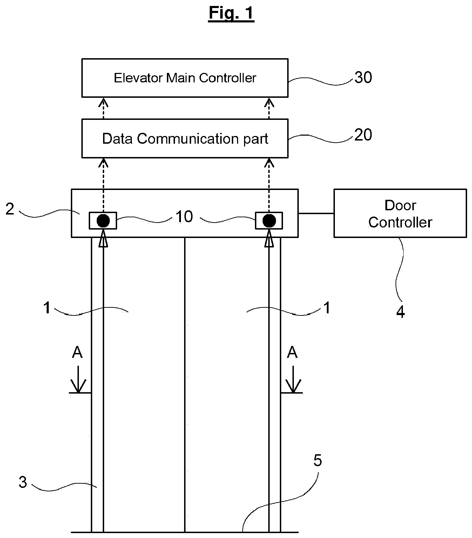

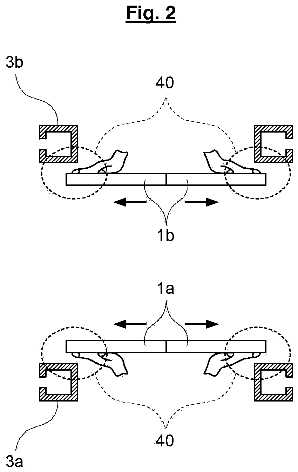

FIG. 1 is a diagram schematically showing an exemplary elevator car door system equipped with a camera for detecting an obstacle-trapping (e.g. finger-trapping) accident according to an embodiment of the present disclosure. FIG. 2 is a diagram showing cross sections of monitoring zones inspected by an elevator door control system in the elevator car door system of FIG. 1.

For convenience of explanation, hereinafter, a finger-trapping will be described as an example of obstacle-jamming accident within a gap between an elevator door and a gate frame, but it should be noted that there is no limitation in a type of an obstacle which could be trapped in the gap.

The elevator door control system includes a camera module 10 configured to monitor opening/closing of the doors 1 of the elevator and analyze the monitored video to determine whether there is a finger-trapping accident, a data communication part 20 signally connected to the camera module 10 and configured to transmit the analyzed video, and a main controller 30 of the elevator configured to control opening/closing of the doors 1 of the elevator based on determination results of the analyzed video transmitted from the data communication part 20. That is, the control system monitors the operation of the door system, such that the doors are opened/closed according to a signal transmitted from the door system. The control system controls the opening/closing of the doors by detecting a finger-trapping accident based on the image captured by the camera module, which will be detailed later.

The elevator car door system shown in FIG. 1 includes car doors 1a of the elevator doors 1, a car door operator lintel 2, a gate frame of the car door 3, a door controller 4, a sill 5, a camera module 10, a data communication part 20, and a main controller 30 of the elevator.

The doors of the elevator generally include two pairs of doors (i.e. a pair of car doors 1a and a pair of landing doors 1b), for example, such that the doors may slide in the opposite directions along a track rail to be opened. Each of the car doors 1a are coupled with the landing doors 1b by a coupling mechanism to operate together upon opening/closing of the doors.

The car door operator lintel 2 is installed above the elevator car doors 1a. At least one camera module 10 may be provided on the car door operator lintel 2. If necessary, such a camera module may be additionally provided on the landing door side.

The camera module 10 installed on the car door operator lintel 2 may monitor the opening/closing of the elevator car doors 1a (and desirably including the landing doors 1b) and analyze the captured video to determine whether there is a finger-trapping accident. The monitoring of the camera module can basically cover only a function of inspection without any capture (for recordation) of opening/closing of the doors, or additionally cover a function of capturing opening/closing of the doors.

The video monitored by the camera module 10 on the opening/closing of the elevator doors includes monitoring zones 40. The monitoring zones 40 at least includes a gap between the elevator car doors 1a and a gate frame of car door 3a and a gap between the landing doors 1b and a gate frame of landing door 3b, as shown in FIG. 2.

The camera module 10 may be an IoT (Internet of Things) camera and may detect an obstacle from the monitoring zones 40, i.e., the gap between the elevator car doors and the gate frame and the gap between the landing doors and the gate frame while the elevator car doors 1a or the landing doors 1b are opening or when they are closed. Therefore, it is preferable that the IoT camera is installed on each of the left-hand and right-hand sides above an elevator car door operator. Alternatively, only one camera may be installed at the center. Also, as needed, an appropriate number of the IoT cameras may be installed on the equivalent position(s) at the landing doors side.

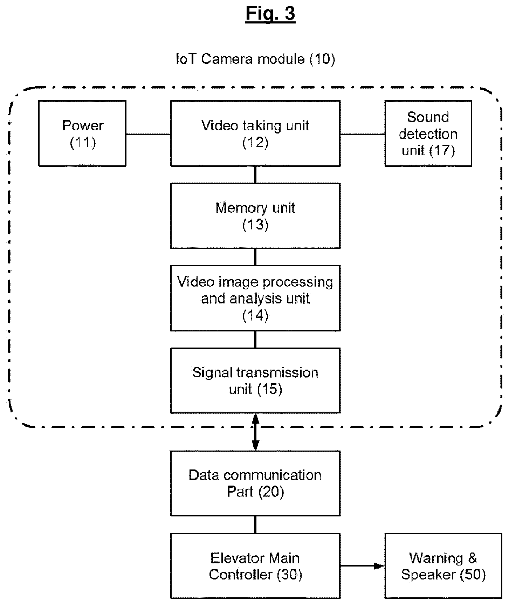

FIG. 3 is a block diagram of the camera module 10 of the elevator door control system according to an embodiment of the present disclosure.

As shown in FIG. 3, the camera module 10 includes a video capturing unit 12 for capturing opening/closing of the elevator car doors 1a and the landing doors 1b, a memory unit 13 storing the video captured by the video capturing unit 12, a video processing and analyzing unit 14 for determining whether there is a finger-trapping accident by analyzing the video of the elevator car doors 1a and the landing doors 1b captured by the video capturing unit 12,, and a signal transmission unit 15 for transmitting determination results from the video processing and analyzing unit 14 to the main controller 30 of the elevator.

The video capturing unit 12 may include a variety of cameras such as one using a thermographic image sensor or charge-coupled devices (CCD), and an analog camera.

The opening/closing of the doors 1 of the elevator may be monitored and captured by the video capturing unit 12 after a command to open the doors is received from the main controller 30 of the elevator until the doors 1 of the elevator reach the monitoring zones 40.

Upon receiving the command from the main controller 30 of the elevator, the video processing and analyzing unit 14 may determine whether there is a finger-trapping accident by comparing a reference video with those captured after the doors are opening until the elevator car doors 1a and the landing doors 1b reach the monitoring zones 40. The reference video refers to a video stored in the memory unit 13 of the camera module without any obstacle within a gap between the elevator door and a gate frame of the elevator door.

That is, it is determined whether a child's finger is trapped by comparing the reference video with real-time videos on the monitoring zones 40 captured after a command to open the doors is received from the main controller 30 of the elevator until they reach the monitoring zones 40. The videos to be compared with the reference video refer to the real-time videos captured by the video capturing unit 12 and stored in the memory unit 13 while the doors are closed and are opening until they reach the monitoring zones. This is to cope with a finger-trapping accident suddenly occurring while the doors are opening, as well as a finger-trapping accident occurring when the doors start to open.

The video processing and analyzing unit 14 analyzes the video on the doors captured by the video capturing unit 12 to detect a finger-trapping accident. The video processing and analyzing unit 14 may analyze the video based on the intensity, brightness and color of light, the coordinates, a speed of a quick action of a finger-trapping accident, etc., may convert it into a digital signal to output it, and may perform image processing using algorithms of a variety of functions, thereby determining whether there is a finger-trapping accident.

Preferably, it may be determined whether there is a finger-trapping accident by using an algorithm with filtering functionality for identifying a false image such as a shadow from the video captured by the video capturing unit 12 or for handing an erroneous operation caused by illumination in the elevator car or light reflected off a structure therein.

The camera module 10 may further include a sound detection unit 17 for detecting a finger-trapping accident based on a screaming sound.

For example, the video capturing unit 12 includes the sound detection unit 17 having a microphone built in the camera, such that it can determine whether there is a finger-trapping accident based on sound detection by using the microphone. When a child has her/his finger trapped in the gap between the doors and screams, her/his screaming is input to the sound detection unit 17 through the microphone, it is recognized that the finger is trapped in the gap between the doors. Then, the main controller 30 of the elevator immediately issues a signal to instruct to stop opening the doors. When this happens, auditory or visual information notifying of the event that the finger is trapped in the gap may be sent by using a speaker or a board 50 installed in the elevator car or on the landing. Meanwhile, such an alarm message can be also provided regardless of the sound detection unit 17

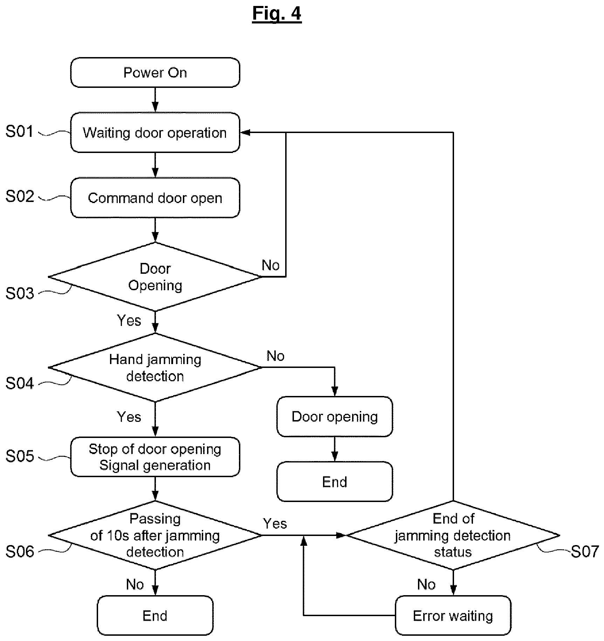

Hereinafter, a method for controlling the doors of the elevator to cope with e.g. a finger trap accident according to an exemplary embodiment of the present disclosure will be described with reference to FIG. 4. FIG. 4 is a flowchart for illustrating operations of the method for controlling the doors according to an exemplary embodiment of the present disclosure.

The method starts with waiting for door operation (step S01). When a command to open the doors is issued from the main controller 30 of the elevator (step S02), the doors start to open (step S03).

Then, the camera module determines whether there is a finger-trapping accident in the monitoring zones (step S04). Specifically, the camera module directly monitors and captures the opening/closing of the elevator doors around the monitoring zones, i.e., the gaps between the doors of the elevator and the gate frames, and analyzes the captured video to determine whether there is a finger-trapping accident. It is determined whether there is a finger-trapping accident by comparing the reference video and the real-time videos stored after the elevator control module issues the command to open the doors. Subsequently, opening/closing of the doors of the elevator is controlled based on the determination results.

If it is determined that there is a finger-trapping accident, the main controller 30 of the elevator generates a signal to stop opening the doors and issues the signal immediately to stop the opening of the doors for safety (step S05).

After a predetermined time elapses since the finger-trapping accident occurs (step S06), detection of the accident is terminated (step S07). Subsequently, the process returns to the initial standby mode (step S01).

In the foregoing description, the operation of the pair of elevator car doors 1a and the pair of landing doors 1b have been described as an example with reference to FIGS. 1 and 2. Accordingly, there are two gaps on left and right-hand sides between the landing doors and the gate frame when viewed from the landing side. Likewise, there are two gaps between the left and right-hand sides between the elevator car doors and the gate frame when viewed from the elevator car side. Thus, as shown in FIG. 2, there are four monitoring zones for the four gaps, respectively.

It is to be understood that this is merely illustrative and the configuration and coupled operation of the landing/elevator car doors as well as the number of dangerous gaps, the number and locations of required camera module 10 may vary without departing from the scope of the present disclosure. For example, a single elevator landing door and a single car door may be disposed, which slide along a track rail in a direction to be opened.

It is also to be understood that the exemplary embodiments of the present disclosure are directed to a unit element of an entire elevator door system, and may be applied only to an elevator car system or only to a landing system.

While several embodiments have been disclosed, it will be apparent to those of ordinary skill in the art that aspects of the present disclosure include many more embodiments and implementations. Accordingly, aspects of the present disclosure are not to be restricted except in light of the attached claims and their equivalents. It will also be apparent to those of ordinary skill in the art that variations and modifications can be made without departing from the true scope of the present disclosure. For example, in some instances, one or more features disclosed in connection with one embodiment can be used alone or in combination with one or more features of one or more other embodiments.

## Claims

1. An elevator door control system comprising:
at least one camera module configured to monitor opening or closing of doors of an elevator and analyze the monitored video of opening or closing of doors of an elevator door to determine whether there is an obstacle-trapping accident;
a data communication part configured to transmit the analyzed video; and
a main controller of the elevator configured to control opening or closing of the doors of the elevator based on determination results of the analyzed video transmitted from the data communication part.

2. The system of claim 1, wherein the camera module monitors the opening or closing of the doors of the elevator directly at monitoring zones, and wherein the monitoring zones include at least a gap between the elevator door and a gate frame of the elevator door.

3. The system of claim 2, wherein the camera module monitors the opening or closing of the doors of the elevator after the main controller of the elevator issues a command to open the doors until the doors of the elevator reach the monitoring zones.

4. The system of claim 1, 2 or 3, wherein the at least one camera module is disposed on a door operator lintel installed above the elevator door.

5. The system of any preceding claim, wherein the camera module is configured to capture opening or closing of doors of the elevator for the video analysis.

6. The system of claim 5, wherein the camera module is an Internet of Things (IoT) camera configured to detect an action in a gap between the elevator door and a gate frame of the elevator door.

7. The system of claim 5 or 6, wherein the elevator doors comprises a car door and a landing door, and the camera module comprises
a video capturing unit configured to capture opening or closing of the elevator car door and the landing door;
a video processing and analyzing unit configured to analyze the video captured by the video capturing unit to determine whether there is a finger-trapping accident; and
a signal transmission unit configured to transmit determination results from the video processing and analyzing unit to the data communication part.

8. The system of claim 7, wherein the video processing and analyzing unit compares a reference video without any obstacle within a gap between the elevator door and a gate frame of the elevator door with the video captured after the main controller of the elevator issues a command to open the doors, to determine whether there is an obstacle-trapping accident.

9. The system of claim 7 or 8, wherein the video processing and analyzing unit comprises filter functionality for identifying a false image or for preventing an erroneous operation caused by light reflected off a structure in the elevator.

10. The system of claim 7, 8 or 9, wherein the camera module further comprises a sound detection unit configured to detect a finger-trapping accident based on a screaming sound.

11. A method for controlling doors of an elevator, the method comprising:
monitoring opening or closing of the doors of the elevator, the monitoring being carried out directly on monitoring zones including gaps between the doors of the elevator and gate frames, after a command to open the doors is received from a main controller of the elevator until the doors of the elevator reach the monitoring zones;
determining whether there is an obstacle-trapping accident by analyzing the monitored video; and
controlling the opening or closing of the doors of the elevator based on the determination results as to whether a finger is trapped in any of the gaps.

12. The method of claim 11, wherein the monitoring step includes capturing the opening or closing of the doors of the elevator, and the determining step is conducted by comparing a reference video without any obstacle within the gap with the video captured after the main controller of the elevator issues a command to open the doors.

13. The method of claim 11 or 12, wherein the determining step comprises a filter step for identifying a false image or for preventing an erroneous operation caused by light reflected off a structure in the elevator.

14. The method of claim 11, 12 or 13, further comprising a step of sound detection configured to detect a finger-trapping accident based on a screaming sound.

15. An elevator car comprising:
at least one elevator door configured to be opened or closed by relative movement to a gate frame; and
at least one Internet of Things (IoT) camera configured to detect an obstacle in a gap between the elevator door and the gate frame,
wherein the at least one IoT camera is disposed on a car door operator lintel installed above the elevator car door so that it directly monitors a monitoring zone including the gap, and
wherein the elevator door is opened or closed based on results of the determination as to whether an obstacle is trapped in the gap made by the IoT camera.
